# EUROPEAN PATENT SPECIFICATION

(11) **EP 1 790 509 B1**
(45) Date of publication and mention of the grant of the patent: **28.04.2010**
(21) Application number: 06124908.2
(22) Date of filing: 28.11.2006
(51) Int. Cl.: B60H 1/00

(54) **Heating and conditioning unit which can be installed from the front side of a vehicle, vehicle equipped with such unit and method of installing it**
Heizungs- und Klimaanlage, die von der Frontseite eines Fahrzeugs installiert werden kann, und Fahrzeug mit solch einer Einheit und Verfahren zur Installation
Installation de chauffage et/ou de climatisation pouvant être installé par le côté avant d'un véhicule, et véhicule équipé avec ladite unité et méthode d'installation

(30) Priority: 28.11.2005 IT MI20052265
(43) Date of publication of application: 30.05.2007
(73) Proprietor: IVECO S.p.A., 10156 Torino (IT)
(72) Inventor: Bellero, Domenico, 10026 Santena (IT); Giovine, Mauro, 10090 Castiglione Torinese (IT); Pippione, Eugenio, 10141 Torino (IT)
(74) Representative: Borsano, Corrado

(56) References cited:
- DE-A1- 10 222 073
- DE-A1- 10 350 399
- FR-A- 2 480 892
- FR-A- 2 697 475
- US-A- 4 232 211
- US-A- 4 625 911
- US-A- 5 222 372

## Description

### FIELD OF INVENTION

The present invention relates to a heating and conditioning unit for the passenger compartment of a vehicle, in particular an industrial or similar vehicle and a vehicle equipped with such unit, for example as disclosed in US 5222372 A.

### PRIOR ART

Vehicles are generally equipped with passenger compartment heating and ventilation systems. They include a fan, able to suck air from the outside or from the inside of the vehicle, a heater, that is a heat exchanger, which is generally fed with the engine coolant on the pipe side so as to transfer heat to the air to be fed to the passenger compartment. If heating is not required, it is possible to stop or adjust the flow rate of the fluid in the heater, or, as it occurs more and more often, it will be possible to adjust the air flow which comes into contact with the exchanger and simultaneously an airflow which is circulated inside the passenger compartment without coming into contact with the exchanger. For example, a usual solution involves one or more fins or deflecting baffles used for distributing the airflow, fed by the fan or just by the movement of the vehicle, between two channels, one of which includes the exchanger whereas the other is a bypass channel. The rejoined air currents are then distributed to the passenger compartment through a series of channels and openings in the vehicle dashboard. The systems may also include an evaporator for cooling the air, if required, in other words an exchanger where the fluid of a common refrigerating circuit is evaporated, generally on the pipe side, thereby withdrawing heat from the air that comes into contact with the evaporator. The air which is then fed to the heating exchanger or to the bypass channel generally flows through the evaporator; this does not cause problems because it withdraws heat only if the refrigerating circuit is operating.

Furthermore, on industrial vehicles, an additional heater is commonly used for heating the passenger compartment, especially if the vehicle is not in motion. Such heater can be of a different type: it is often a fuel burner - fed with air taken from the outside or part of the air sucked in by the fan, thus discharging the burnt gases toward the outside - capable of transferring heat to the air to be fed to the passenger compartment; it can also be an air-air exchanger fed on one side with burnt gases produced by a burner placed in another more suitable position. According to another possible solution, it can be an electric heater, powered with batteries or by a generator operated by an auxiliary combustion engine, or an exchanger fed by a cooling circuit of an auxiliary motor or by a circuit heated by the cooling air of an auxiliary motor.

The above components are generally housed in the central front part of the passenger compartment, beneath the dashboard or inside of it, between the pedals and the space used for the driver's passenger's feet. The air channels are connected to passages in the dashboard, connected to the various openings in the vehicle (for example those used for sending air towards the feet, windshield and half way up towards the passengers); the dashboard also contains adjustment and deflection systems to suitably distribute the air through the openings. The additional heater, if any, is sometimes placed in another position, for example behind a seat, instead of with the other components placed frontally in the passenger compartment.

The installation of the components and of the structures housing them, which include the air channels with the above baffles or adjustment fins, is carried out by putting at least part of the components or structures into the passenger compartment; it will be then possible to install the dashboard.

Thus, for this reason, the known systems may be quite difficult to install; furthermore, there is a major problem in terms of cost and time needed to carry out maintenance operations inasmuch as it is necessary to remove the dashboard as well as all single components from the structure housing them. This is why the above solutions are considered unsatisfactory.

### SUMMARY OF THE INVENTION

The above problems have been solved, according to the present invention, by a vehicle comprising an opening located on the front side of the vehicle and a heating and conditioning unit comprising:
a casing;
a heating exchanger;
a fan;
**characterized in that** the heating and conditioning unit is inserted and placed in its operating position already assembled, entirely from the outside through said opening which is closed by a ventilation grid.

Unit "already assembled" means that the listed components are already positioned in the casing, thus the unit can be fixed with known devices, for example bolts, to the dashboard and to other parts of the vehicle; it can also be fixed inside the passenger compartment. The unit is particularly suitable for vehicles (for instance vans, truck, trucking rigs) in which the engine is positioned beneath the passenger compartment.

A particularly interesting part of the invention is given in the attached claims.

### LIST OF FIGURES

This invention will now be described through a detailed description of preferred but not exclusive embodiments, given only as an example, with the aid of the enclosed figures wherein:
figure 1 shows a schematic view of a longitudinal section of a part of a vehicle passenger compartment, according to a vertical plane passing through the centerline of the vehicle, comprising a unit according to an embodiment of the invention;
figure 2 schematically shows a section similar to that of figure 1 comprising a unit according to another embodiment of the invention.

### DETAILED DESCRIPTION OF AN EMBODIMENT

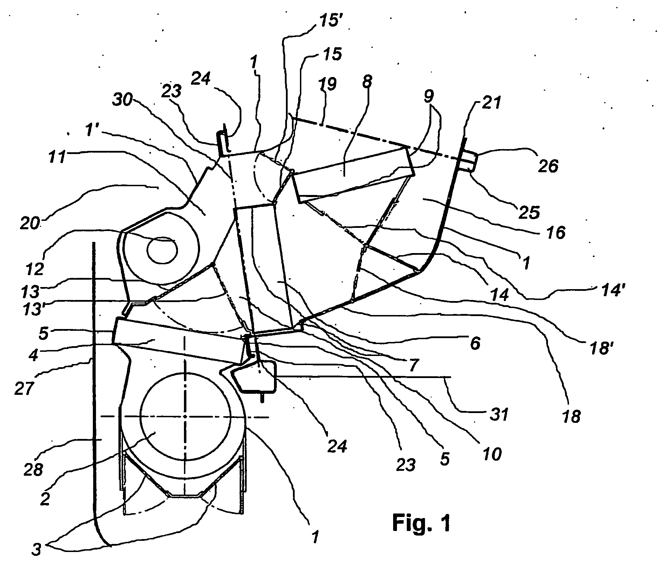

Figure 1 schematically represents a section of a unit based on the present invention. It is installed in the operating position in the front part of the vehicle, in the centerline.

It is possible to single out a casing 1 containing a fan 2, which can include an electric motor and one or more impellers; in the case described, there is a central motor and two side impellers lined up along an axis perpendicular to the axis of the drawing. The fan is used for sucking air from the inlets with baffles 3, preferably adjustable, so as to allow air coming from outside the vehicle to enter. It is possible to include other inlets (not shown), for example placed sideways (that is perpendicularly to the plane of the drawing) so as to suck air from the inside of the passenger compartment, if the recirculation is required. The fan is used for sending air to a filter 4. The filter, which can be of known type, can be placed in special frames 5 supported by the casing 1, or be part of it; according to an embodiment of the invention, the filter can be pulled out or inserted in a direction perpendicular with respect to the drawing so that it can be easily replaced, after opening a special door in a side wall of the casing, when the unit is not installed on the vehicle. The filter could also be placed in another position, for example upstream of the fan.

According to a preferred embodiment of the invention, the casing includes two side walls (not shown) located parallel to the plane of the drawing (hence perpendicular to the walls of the casing shown) so as to close it laterally.

According to an embodiment of the invention, the unit includes an evaporator 6, which can be supported by supports 7, which can be similar to the supports of the filter. The evaporator, of a per se known type, can be suitably connected to an inlet and to an outlet of the coolant, for example with pipes or joints which can partly run inside the casing thus running through it, preferably at a point outside the passenger compartment there can be protections and insulations for pipes and joints located in correspondence of the running-through point.

According to a possible embodiment, at least one side wall is provided with access doors for the introduction and removal of internal components, such as the evaporator or the exchanger.

The casing includes the heating exchanger 8, which is also supported by supports 9, preferably fixed to the casing. Connections to the pipes of the fluid used for transferring heat can be carried out as those described for the evaporator. Preferably, there are portions of pipes inside the unit connecting the exchanger 8 with external water circulation pipes as they can be connected to these pipes by running through the casing at a point which remains outside of the passenger compartment, for instance at a side of the secondary channel (which will be described later), the width of which may be smaller than the rest of the unit.

According to a possible embodiment of the invention, there is a main channel 10 for the flow of air inside the casing, and a secondary channel 11. The secondary channel, if present, is used for housing an auxiliary heater 12 which can be suitably positioned, for example supported and connected with supply lines and external discharge lines similarly to the other components, in the same way as in all known prior art, said auxiliary heater can be of a different type, like the ones listed above, and its shape and position inside the secondary channel 11 may also depend on its structure. For example, it may be a burner in the shape of a finned pipe. It can be connected to a combustion air intake pipe which connects it to the outside of the unit in a suitable position, to exhaust gas discharge pipes (again, to the outside of the unit) and to the fuel supply pipes, fuel that may be the same used for the vehicle engine.

The casing may also have openings through which the components can be inserted or removed without removing the side wall. The supports can be sliders, or simple seats, which may also include spring devices to hold the components.

The casing contains airflow conveying and distribution devices, such as a series of fins or baffles; the opening with baffle 13, which can move between the represented position and position 13', is used for distributing the flow of air between the main and secondary channel, according to a preferred embodiment, thus diverting it completely into one or the other of the two channels. The opening with baffle 14 is used for distributing the flow between the exchanger 8, capable of heating the flow running through it, or into a bypass 16 if the air does not need to be heated; its position may be the one represented or the one indicated with 14', hence adjusting the heat which is transferred to the passenger compartment. The openings with baffles15 and 18 are used for conveying the flow of air that runs through the secondary channel in the dashboard, or (if in positions 15' and 18') towards the lower part of the passenger compartment, so that the air can be directed to the back of the passenger compartment (as a matter of fact, the auxiliary heater is often useful for heating the bunks, since it is used during stops).

The unit communicates with the dashboard 21 of the vehicle (the boundary between the dashboard and the unit is represented by plane 19). The air that crossing the unit through the main channel, through the exchanger 8 or the bypass 16, and the air that flows through the secondary channel 11 - except in the above discussed case, when the air is conveyed through the openings 18 - runs through this plane ending up in the dashboard passages, which suitably distribute it into the passenger compartment.

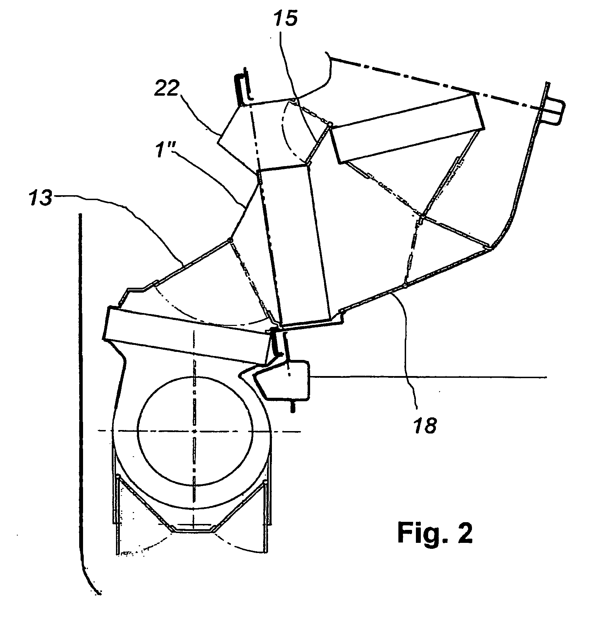

If not required, there may be not an evaporator 6, although the unit can be set up with the supports 7, in order to install it later; likewise, there may be not a secondary channel, if there is no auxiliary heater, or if, as it sometimes occurs, it is not part of the unit, or if it is integrated in the heating exchanger 8 (for example if there are electric resistances or a separate liquid circuit such as an auxiliary engine cooling circuit). Figure 2 shows a unit without the secondary channel. In this case, the casing part 1' in figure 1 is missing; the casing is delimited by the wall 1" which, in the previous case, was used for separating the two channels. The unit in figure 2 is designed for the addition of such channel, hence the openings and baffles 13, 15 and 18 are kept although they are inoperative and blocked in the position shown; the wall 22 can be broken in order to add the secondary channel. There may also be a unit not set up for the secondary channel, hence without the openings (replaced by closed walls).

According to the present invention, the unit can be inserted through an opening on the front side of the vehicle. The unit can be pre-assembled with all components inserted through the opening and fixed in place with special devices, for example devices capable of fixing it to the dashboard and/or to walls which delimit the passenger compartment.

Figure 1 represents a unit, provided with sealing devices 23, for sealing with walls 24 delimiting the passenger compartment, for example a gasket frame, or a flange or brackets which fix it in place with bolts if necessary. There may preferably be devices 25 for fastening to the dashboard, such as one or more eyelets used for being bolted to corresponding eyelets 26 of the dashboard 21.

The unit can be inserted, according to a method which is a further embodiment of the invention, by removing a ventilation grid located on the front side of many vehicles, whose position is approximately indicated by line 27. The vehicle shown has an engine positioned beneath the passenger compartment. The wall 24 of the passenger compartment separates it from a ventilation compartment 28, which can be above the engine compartment, thus reaching the front opening. The grid can be the same as the one which allows the air to flow into the engine compartment, particularly to the radiator which can be positioned beneath the unit. Part of the unit reaches the ventilation compartment after being fastened, for example beneath a zone 20 which normally houses the motor of the windshield wipers. Thus the unit closes a hole, represented by plane 30 located in the central front part of the passenger compartment, for example near the floor 31 beneath the dashboard, in the passenger compartment wall 24, whereby the unit can be closed with devices 23. The advantages associated with the use of this invention are apparent when compared to systems of the known art, in which part of the components - such as the heating exchanger and the evaporator, if any - were inserted from the passenger compartment and installed together with the dashboard, and others - such as the fan and the filter - were inserted in the ventilation compartment. The replacement of components as well as maintenance operations generally involved the removal of the dashboard, whereas, according to the invention, it is possible to remove the entire unit by just removing the ventilation grid and the fastening devices. The unit can then be easily opened and all required operations can be carried out; it will then be possible to reassemble it and reinstall it, thereby reducing maintenance costs.

Obviously, all other required connections can be carried out: for example piping connected to the various exchangers, wiring (if any), connections to mechanical machine-members for controlling the fins or doors, etc. Preferably, the auxiliary heater is located, when the unit is installed, outside the passenger compartment, hence the connecting points can be easily identified through the casing with the external piping.

Other supporting and/or fixing systems may be located in the ventilation compartment, if considered necessary.

The invention also applies to a vehicle provided with an opening at the front side and equipped with a unit as described above, wherein said unit is fixed to the dashboard.

## Claims

1. Vehicle comprising an opening located on the front side of the vehicle and a heating and conditioning unit comprising:
a casing (1);
a heating exchanger (8);
a fan (2);
**characterized in that** the heating and conditioning unit is inserted and placed in its operating position already assembled, entirely from the outside through said opening located on the front side of the vehicle and said opening is closed with a ventilation grid.

2. Vehicle according to claim 1 **characterized in that** said unit comprises an evaporator (6) for cooling the air.

3. Vehicle according to any of the previous claims, **characterized in that** said casing comprises two parallel side walls, at least one of which is provided with access openings for the introduction and removal of internal components.

4. Vehicle according to any of the previous claims, **characterized in that** said unit comprises devices (23) for sealing or fixing it to the wall (24) of the vehicle passenger compartment.

5. Vehicle according to any of the previous claims, **characterized in that** said unit comprises an additional heater (12).

6. Vehicle according to claim 5, **characterized in that** said additional heater is a burner or an air-air exchanger fed with exhaust gases coming from a burner.

7. Vehicle according to claim 5, **characterized in that** said additional heater is an electric heater.

8. Vehicle according to claim 5, 6 or 7, **characterized in that** said unit comprises a main channel (10) and a secondary channel (11) for the air and that said additional heater is housed in said secondary channel.

9. Vehicle according to claim 8, **characterized in that** said unit comprises devices (13) for conveying the air alternately into said main channel or said secondary channel.

10. Vehicle according to any of the previous claims, **characterized in that** said unit comprises a bypass (16) and devices (14) for distributing the airflow between said bypass and said heating exchanger.

11. Vehicle according to any of the previous claims, **characterized in that** said unit partly extends into a ventilation compartment (28) which communicates with said front opening.

12. Vehicle according to any of the previous claims, **characterized in that** said ventilation compartment is located above the engine compartment.

13. Vehicle according to any of the previous claims, wherein said unit is located in the front side of the passenger compartment.

14. Method for installing a heating and conditioning unit comprising:
a casing (1);
a heating exchanger (8);
a fan (2);
on a vehicle having an opening located on the front side, **characterized in that** it comprises the introduction of said unit into said opening, and closing said opening with a ventilation grid.

15. Method according to claim 14, **characterized in that** said unit is fixed to the dashboard and/or walls of the vehicle passenger compartment.

## Patentansprüche

1. Fahrzeug, welches eine sich an der Vorderseite dieses Fahrzeugs befindliche Öffnung und eine Heizungs- und Klimaanlage umfasst, wobei die Letztere umfasst:
- ein Gehäuse (1),
- einen Wärmetauscher (8),
- ein Gebläse (2),
**dadurch gekennzeichnet, dass** die Heizungs- und Klimaanlage in ihrem betriebsbereiten und bereits vormontierten Zustand als Ganzes von außen durch die genannte Öffnung in der Vorderseite des Fahrzeugs eingesetzt und eingebaut wird und die genannte Öffnung mit einem Lüftungsgitter verschlossen wird.

2. Fahrzeug nach Anspruch 1, **dadurch gekennzeichnet, dass** die genannte Anlage einen Verdampfer (6) zum Kühlen der Luft umfasst.

3. Fahrzeug nach irgend einem der vorangehenden Ansprüche, **dadurch gekennzeichnet, dass** das genannte Gehäuse zwei parallele Seitenwände umfasst, von denen mindestens eine mit Zugangsöffnungen für das Einbringen und das Herausnehmen von inneren Bauteilen versehen ist.

4. Fahrzeug nach irgend einem der vorangehenden Ansprüche, **dadurch gekennzeichnet, dass** die genannte Anlage Vorrichtungen (23) umfasst, die zu ihrer Befestigung oder Abdichtung an der Wand (24) des Fahrgastraumes bzw. der Fahrerkabine des Fahrzeugs dienen.

5. Fahrzeug nach irgend einem der vorangehenden Ansprüche, **dadurch gekennzeichnet, dass** die genannte Anlage ein zusätzliches Heizgerät (12) umfasst.

6. Fahrzeug nach Anspruch 5, **dadurch gekennzeichnet, dass** das genannte zusätzliche Heizgerät ein Brenner oder ein Luft-Luft-Wärmetauscher ist, welcher mit Abgasen gespeist wird, die von einem Brenner kommen.

7. Fahrzeug nach Anspruch 5, **dadurch gekennzeichnet, dass** das genannte zusätzliche Heizgerät ein Elektroheizgerät ist.

8. Fahrzeug nach Anspruch 5, 6 oder 7, **dadurch gekennzeichnet, dass** die genannte Anlage einen Hauptkanal (10) und einen Nebenkanal (11) für die Luft umfasst und dass das genannte zusätzliche Heizgerät in dem genannten Nebenkanal untergebracht ist.

9. Fahrzeug nach Anspruch 8, **dadurch gekennzeichnet, dass** die genannte Anlage Vorrichtungen (13) für die Beförderung der Luft wechselweise in den genannten Hauptkanal oder in den genannten Nebenkanal umfasst.

10. Fahrzeug nach irgend einem der vorangehenden Ansprüche, **dadurch gekennzeichnet, dass** die genannte Einheit einen Bypass (16) und Vorrichtungen (14) zur Verteilung des Luftstromes zwischen dem genannten Bypass und dem genannten Wärmetauscher umfasst.

11. Fahrzeug nach irgend einem der vorangehenden Ansprüche, **dadurch gekennzeichnet, dass** die genannte Anlage sich teilweise in eine Belüftungskammer (28) hinein erstreckt, welche mit der genannten Öffnung an der Vorderseite strömungsmäßig in Verbindung steht.

12. Fahrzeug nach irgend einem der vorangehenden Ansprüche, **dadurch gekennzeichnet, dass** die genannte Belüftungskammer sich oberhalb des Motorraumes befindet.

13. Fahrzeug nach irgend einem der vorangehenden Ansprüche, bei welchem die genannte Anlage sich in der Vorderseite des Fahrgastraumes bzw. der Fahrerkabine befindet.

14. Verfahren zum Einbau einer Heizungs- und Klimaanlage, welche umfasst:
- ein Gehäuse (1),
- einen Wärmetauscher (8),
- ein Gebläse (2),
in ein Fahrzeug, welches eine an der Vorderseite befindliche Öffnung aufweist, **dadurch gekennzeichnet, dass** dieses Verfahren das Einbringen der genannten Anlage in die genannte Öffnung und das Abdecken der genannten Öffnung mit einem Belüftungsgitter umfasst.

15. Verfahren nach Anspruch 14, **dadurch gekennzeichnet, dass** die genannte Anlage am Armaturenbrett und/oder den Wänden des Fahrgastraumes bzw. der Fahrerkabine des Fahrzeugs befestigt ist.

## Revendications

1. Véhicule comprenant une ouverture située sur le côté frontal du véhicule et une unité de chauffage et de conditionnement, comprenant:
un boîtier (1);
un échangeur de chaleur (8);
un ventilateur (2);
**caractérisé en ce que** l'unité de chauffage et de conditionnement est insérée et placée dans sa position fonctionnelle déjà assemblée, entièrement depuis l'extérieur à travers ladite ouverture située sur le côté frontal du véhicule, et ladite ouverture est fermée par une grille de ventilation.

2. Véhicule selon la revendication 1, **caractérisé en ce que** ladite unité comprend un évaporateur (6) pour le refroidissement de l'air.

3. Véhicule selon l'une quelconque des revendications précédentes, **caractérisé en ce que** ledit boîtier comprend deux parois latérales parallèles dont au moins une présente des ouvertures d'accès pour l'introduction et le retrait de composants internes.

4. Véhicule selon l'une quelconque des revendications précédentes, **caractérisé en ce que** ladite unité comprend des dispositifs (23) pour le scellement ou la fixation de celle-ci à la paroi (24) de l'habitacle du véhicule.

5. Véhicule selon l'une quelconque des revendications précédentes, **caractérisé en ce que** ladite unité comprend un organe de chauffage additionnel (12).

6. Véhicule selon la revendication 5, **caractérisé en ce que** ledit organe de chauffage additionnel est un brûleur ou un échangeur air-air alimenté en gaz d'échappement provenant d'un brûleur.

7. Véhicule selon la revendication 5, **caractérisé en ce que** ledit organe de chauffage additionnel est un organe de chauffage électrique.

8. Véhicule selon la revendication 5, 6 ou 7, **caractérisé en ce que** ladite unité comprend un canal principal (10) et un canal secondaire (11) pour l'air et **en ce que** ledit organe de chauffage additionnel est logé dans ledit canal secondaire.

9. Véhicule selon la revendication 8, **caractérisé en ce que** ladite unité comprend des dispositifs (13) pour le convoyage de l'air alternativement dans ledit canal principal ou dans ledit canal secondaire.

10. Véhicule selon l'une quelconque des revendications précédentes, **caractérisé en ce que** ladite unité comprend une dérivation (16) et des dispositifs (14) pour distribuer l'écoulement d'air entre ladite dérivation et ledit échangeur de chaleur.

11. Véhicule selon l'une quelconque des revendications précédentes, **caractérisé en ce que** ladite unité s'étend partiellement dans un compartiment de ventilation (28) qui est en communication avec ladite ouverture frontale.

12. Véhicule selon l'une quelconque des revendications précédentes, **caractérisé en ce que** ledit compartiment de ventilation se situe au-dessus du compartiment moteur.

13. Véhicule selon l'une quelconque des revendications précédentes, dans lequel ladite unité est située dans le côté frontal de l'habitacle.

14. Procédé d'installation d'une unité de chauffage et de conditionnement comprenant:
un boîtier (1);
un échangeur de chaleur (8);
un ventilateur (2);
sur un véhicule présentant une ouverture située sur le côté frontal, **caractérisé en ce qu'**il comprend l'introduction de ladite unité dans ladite ouverture et la fermeture de ladite ouverture par une grille de ventilation.

15. Procédé selon la revendication 14, **caractérisé en ce que** ladite unité est fixée au tableau de bord et/ou aux parois de l'habitacle du véhicule.
